# DEMANDE DE BREVET EUROPEEN

(11) **EP 4 109 782 A1**
(43) Date de publication de la demande: **28.12.2022**
(21) Numéro de dépôt: 22181110.2
(22) Date de dépôt: 24.06.2022
(51) Int. Cl.: H04B 10/032, H04B 10/272

(54) **MODULE ÉMETTEUR-RÉCEPTEUR OPTRONIQUE AVEC PROTECTION INTÉGRÉE**

(30) Priorité: 25.06.2021 FR 2106823
(71) Demandeur: Orange, 92130 Issy-les-Moulineaux (FR)
(72) Inventeur: CHANCLOU, Philippe, 92326 CHATILLON (FR)
(74) Mandataire: Vidon Brevets & Stratégie

(57) **Abrégé**

La présente technique concerne un module émetteur-récepteur optronique apte à mettre en œuvre une communication bidirectionnelle optique de type point à point via au moins une fibre optique principale (A), et comprenant :
- un premier module de supervision optique (*Sup1-A*) d'un signal montant reçu via la fibre optique principale (A) délivrant un premier résultat de supervision,
- un premier module de basculement optique (*SW1*) de la communication bidirectionnelle via la fibre optique principale (A) vers une communication bidirectionnelle via une fibre optique de secours (B), et réciproquement, le premier module de basculement optique (*SW1*) étant piloté par le premier module de supervision optique (*Sup1-A*) en fonction dudit premier résultat de supervision délivré.

## Description

### Domaine technique

L'invention se situe dans le domaine des télécommunications par fibres optiques, et concerne plus particulièrement les modules émetteur-récepteur de signaux optiques dans un réseau optique passif (PON pour « Passive Optical Network » en anglais) comprenant un terminal de ligne optique, auquel sont connectés de tels modules émetteur-récepteur, et une pluralité de terminaux de réseau optique.

### Art antérieur

Les équipements appelés terminaux optiques de lignes (OLT pour « Optical Line terminal » en anglais) ont pour fonction de convertir des signaux électriques en des signaux optiques. Un tel équipement d'accès à la fibre (utilisé dans les derniers kilomètres du réseau pour amener la fibre aux clients) est connecté à une infrastructure de fibre optique, composée au départ d'une fibre optique qui traverse des coupleurs optiques en puissance pour connecter une multitude de clients (typiquement soixante-quatre). Le module optronique du client est appelé terminal ou unité de réseau optique (ONU pour « Optical Network Unit » en anglais).

L'invention concerne plus particulièrement le module émetteur-récepteur optronique qui est enfiché dans l'OLT, pour réaliser une connexion point à point (PtP pour « Point to point » en anglais) comme proposé par les normes ITU-T G.985, G.986 et G.9806 à différents débits. Ce module émetteur-récepteur optronique est composé d'une interface électronique comprenant des composants électroniques et d'une interface optique comprenant des composants optiques. Cette interface optique est notamment composée d'une source optique (laser) modulée avec les données descendantes (de l'OLT vers les ONUs) et d'un récepteur optique (photodiode) pour recevoir les données montantes (des ONUs vers l'OLT). Les deux signaux optiques, descendant et montant, sont bidirectionnels et se propagent dans une seule fibre optique. Ces signaux optiques, descendant et montant, utilisent des longueurs d'onde différentes qui sont multiplexées/dé-multiplexées dans l'émetteur-récepteur optronique.

Actuellement, les modules émetteur-récepteur optroniques présentent une interface optique composée d'une seule fibre optique.

Dans le cadre des solutions d'accès à la fibre de type point à point, par exemple pour les professionnels (service à haute valeur ajoutée) ou les antennes mobiles (pour les flux 3G, 4G ou 5G), un module émetteur-récepteur est associé à un dispositif de protection externe contre les coupures de fibres optiques permettant de basculer les signaux optiques vers une seconde fibre « de secours ». Une telle solution de protection met donc en œuvre deux équipements distincts, i.e. le module émetteur-récepteur et le dispositif de protection, à la fois côté équipement réseau OLT (ou côté central) et côté équipement client, afin d'assurer un basculement d'une fibre principale à une fibre de secours en cas de problème détecté sur la fibre principale.

Cette solution présente cependant plusieurs inconvénients. En effet, elle engendre une complexité d'installation, due à la connexion des dispositifs de protection à l'extérieur des modules émetteur-récepteur, ainsi qu'une complexité de maintenance, pour les mêmes raisons et également liée au fait que les deux équipements doivent être gérés et maintenus de manière indépendante, sans compter le fait qu'ils peuvent être fournis par des fabricants différents, impliquant des procédés de maintenance et de mise à jour différents. Par ailleurs, un module émetteur-récepteur est configuré pour émettre une alarme s'il détecte un problème dans la transmission de la liaison PtP alors que le dispositif de protection est configuré pour émettre une alarme lorsqu'il a détecté une rupture dans un lien physique. Deux alarmes sont donc émises pour ce qui correspond en fait à un seul problème, ce qui n'est pas optimal. Enfin, cette solution présente un coût élevé dû à l'ajout du dispositif de protection, côté central et côté client.

Il existe donc un besoin pour une technique permettant d'offrir un service de communication par fibre optique à haute valeur ajoutée présentant une solution de secours en cas de problème sur la fibre optique principale simple et peu coûteux à mettre en œuvre.

### Exposé de l'invention

La présente technique répond à ce besoin en proposant un module émetteur-récepteur optronique apte à mettre en œuvre une communication bidirectionnelle optique de type point à point via au moins une fibre optique principale (A), et comprenant :
- un premier module de supervision optique *(Sup1-A)* d'un signal montant reçu via la fibre optique principale (A) délivrant un premier résultat de supervision,
- un premier module de basculement optique (*SW1*) de la communication bidirectionnelle via la fibre optique principale (A) vers une communication bidirectionnelle via une fibre optique de secours (B), et réciproquement, le premier module de basculement optique (*SW1*) étant piloté par le premier module de supervision optique *(Sup1-A)* en fonction dudit premier résultat de supervision délivré.

Ainsi, la présente technique repose sur une solution nouvelle et inventive de la protection d'une communication bidirectionnelle optique via une fibre optique principale, permettant un basculement sur une fibre optique de secours, par la mise en œuvre d'un module émetteur-récepteur optronique (par exemple connecté à un terminal de ligne optique, côté réseau/central) intégrant la supervision de la fibre en cours d'utilisation et le basculement en cas de détection de coupure. La présente technique tire avantageusement parti de la présence d'une deuxième entré-sortie fibre sur les modules émetteur-récepteur standard, au lieu d'ajouter un équipement supplémentaire effectuant le basculement de fibre.

Côté client, la présente technique s'adapte à un fonctionnement non supervisé, selon l'art antérieur ou selon un premier mode de réalisation de la présente technique, ou un fonctionnement supervisé similaire à celui mis en œuvre côté central, selon un deuxième mode de réalisation.

Selon une caractéristique particulière, le module émetteur-récepteur optronique comprend également un deuxième module de supervision optique (*Sup1-B*) d'un signal montant reçu via la fibre optique de secours (B) délivrant un deuxième résultat de supervision et pilotant ledit premier module de basculement optique (*SW1*).

Ainsi, les deux entrées fibre sont supervisées, de manière à pouvoir basculer d'une fibre principale à une fibre de secours, et vice versa lorsque la fibre principale est réparée. Aucun autre équipement n'est nécessaire en plus du module émetteur-récepteur côté central pour assurer cette réciprocité de basculement.

Par exemple, le premier, respectivement le deuxième, module de supervision optique (*Sup1-A, Sup1-B)* comprend :
- un premier, respectivement deuxième, coupleur optique montant de prélèvement *(COM-A, COM-B)* apte à séparer au moins un signal optique montant (*M-A, M-B*) reçu via la fibre optique principale A, respectivement la fibre optique de secours (B), en deux signaux optiques séparés selon un rapport prédéterminé de puissance de référence pour lesdits signaux optiques séparés, ledit premier, respectivement deuxième, coupleur optique montant de prélèvement *(COM-A, COM-B)* délivrant un premier, respectivement deuxième, signal de puissance faible (*M-A-low, M-B-low*) et un premier, respectivement deuxième, signal de puissance forte (*M-A-high, M-B-high*),
- au moins une première, respectivement deuxième, photodiode de mesure de puissance (*PxA, PxB*) délivrant une première, respectivement deuxième, mesure de puissance associée au premier, respectivement deuxième, signal de puissance faible (*M-A-low, M-B-low*)*.*

Ainsi, la supervision est mise en œuvre de sorte à ne pas impacter le traitement du signal utile, via des éléments optiques permettant de prélever un pourcentage très faible du signal montant reçu pour en mesurer sa puissance, via une photodiode par exemple. Ensuite, cette puissance est comparée à un seuil prédéterminé, par un ou plusieurs composants électroniques. Cette comparaison peut être effectuée en totalité par le module émetteur-récepteur côté central, selon une première variante, ou en partie ou totalement dans un équipement externe. Le résultat de supervision permet ensuite de commander le module de basculement de fibre.

Selon un aspect particulier, le premier, respectivement le deuxième, module de supervision optique (*Sup1-A, Sup1-B)* comprend également au moins un comparateur *Comp* délivrant un résultat de comparaison de la première, respectivement deuxième, mesure de puissance avec au moins une valeur de référence prédéterminée, et comprenant des moyens de pilotage du premier module de basculement optique (*SW1*).

Ainsi, selon cette première variante, le comparateur pilotant le module de basculement, à partir des mesures de puissance effectuées sur les signaux montants, est également intégré au module émetteur-récepteur, de sorte que la supervision et le basculement sont embarqués dans le module émetteur-récepteur côté réseau.

Par exemple, les moyens de pilotage du premier module de basculement optique (*SW1*) correspondent à des moyens de transmission du résultat de comparaison à une entité externe audit émetteur-récepteur optronique et où ledit module émetteur-récepteur optronique comprend des moyens de réception, en provenance de ladite entité externe audit module émetteur-récepteur optronique, d'une commande de pilotage du premier module de basculement optique (*SW1*).

Ainsi, selon cette deuxième variante, seule la comparaison des mesures de puissance avec un seuil est mise en œuvre dans le comparateur du module émetteur-récepteur, le comparateur transmettant ensuite les résultats de comparaison à une entité externe au module émetteur-récepteur, laquelle transmet en retour au module émetteur-récepteur une commande de basculement pour le module de basculement. Cette variante tire parti du fait qu'il existe une fonctionnalité dans un module émetteur-récepteur pour transmettre des données de diagnostic vers l'OLT par exemple, ou tout autre équipement connecté, par exemple via un bus I2C, pour transmettre des données de supervision, ici un résultat de comparaison.

Selon une caractéristique particulière, le module émetteur-récepteur optronique comprend des moyens de transmission de la première, respectivement deuxième, mesure de puissance à une entité externe audit module émetteur-récepteur optronique et des moyens de réception, en provenance de ladite entité externe audit module émetteur-récepteur optronique, d'une commande de pilotage du premier module de basculement optique (*SW1*).

Ainsi, selon cette troisième variante, les mesures de puissance sont directement transmises à une entité extérieure et la comparaison avec un seuil est faite par cette entité, qui transmet en retour au module émetteur-récepteur une commande de basculement, lorsque le résultat de comparaison est négatif. Cette variante tire également parti de la fonctionnalité existante décrite ci-dessus pour transmettre des mesures de puissance à une entité distante.

La présente technique propose également un système de protection d'une communication bidirectionnelle de type point à point via au moins une fibre optique principale (A) entre un terminal de ligne optique *(OLT)* et un équipement client *(ONU)* dans un réseau de communication optique, le système de protection comprenant au moins un premier module émetteur-récepteur optronique *(Tx-Rx-1)* selon les différents modes de réalisation, connecté audit terminal de ligne optique et à ladite au moins une fibre optique principale (A) et au moins un deuxième module émetteur-récepteur optronique *(Tx-Rx-2)* connecté audit équipement client, où ledit deuxième module émetteur-récepteur optronique *(Tx-Rx-2)* est apte à recevoir et émettre un signal sur la fibre optique principale (A) et/ou la fibre optique de secours (B).

Ainsi, la présente technique repose sur une solution nouvelle et inventive de la protection d'une communication bidirectionnelle optique via une fibre optique principale, permettant un basculement sur une fibre optique de secours, par la mise en œuvre d'un système de protection comprenant un module émetteur-récepteur optronique connecté à un terminal de ligne optique intégrant la supervision de la fibre en cours d'utilisation et le basculement en cas de détection de coupure, tel que décrit précédemment, et un module émetteur-récepteur optronique coté client apte à recevoir et émettre un signal optique sur l'une et/ou l'autre des fibres principale et de secours. De cette manière, le basculement mis en œuvre côté réseau n'impacte pas le côté client qui est capable de recevoir sur l'une ou l'autre des fibres utilisées, sans nécessiter de connaître laquelle est réellement utilisée. Le système de la présente invention englobe, côté réseau et client, tous les modes de réalisation des modules émetteur-récepteur et des moyens de pilotage du module de basculement.

Selon un premier mode de réalisation, ledit au moins un deuxième module émetteur-récepteur optronique *(Tx-Rx-2)* comprend une interface optique comprenant un module d'émission, un module de réception et un coupleur optique principal *CO1,* apte à séparer le signal optique descendant issu du module d'émission en deux signaux optiques descendants sensiblement de même puissance à transmettre respectivement dans les deux fibres optiques A et *B*, et apte à agréger des signaux représentatifs des signaux montants reçus respectivement via les fibres optiques A et *B*, en un signal à traiter par le module de réception.

Selon ce premier mode de réalisation, le module émetteur-récepteur côté client n'embarque pas de supervision ni de basculement et peut recevoir et émettre via les deux fibres, quelle que soit celle sur laquelle la communication bidirectionnelle est mise en œuvre.

Selon un deuxième mode de réalisation, ledit au moins un deuxième module émetteur-récepteur optronique *(Tx-Rx-2)* comprend :
- un troisième module de supervision optique *(Sup2-A)* d'un signal reçu via la fibre optique principale (A) délivrant un troisième résultat de supervision,
- un deuxième module de basculement optique (*SW2*) de la communication bidirectionnelle via la fibre optique principale (A) vers une communication bidirectionnelle via une fibre optique de secours (*B*), et réciproquement, le deuxième module de basculement optique (*SW2*) étant piloté par le troisième module de supervision optique *(Sup2-A)* en fonction dudit troisième résultat de supervision délivré.

Selon ce deuxième mode de réalisation, le module émetteur-récepteur côté client embarque lui aussi de la supervision et un module de basculement, et fonctionne comme le module émetteur-récepteur côté central. Ce mode de réalisation permet de mettre en œuvre les mêmes équipements côté central et côté client, simplifiant ainsi l'approvisionnement en équipements, la conception et l'installation de l'infrastructure, ainsi que le fonctionnement et la protection de cette infrastructure.

Selon un aspect particulier, ledit au moins un deuxième module émetteur-récepteur optronique *(Tx-Rx-2)* comprend également un deuxième module de supervision optique (*Sup2-B*) d'un signal reçu via la fibre optique de secours (*B*) délivrant un quatrième résultat de supervision et pilotant ledit deuxième module de basculement optique (*SW2*). De ce fait, le basculement de la fibre principal vers la fibre de secours et réciproquement est possible grâce à une supervision des signaux reçus sur les deux fibres.

Par exemple, le premier module de basculement optique (SW1) et/ou le deuxième module de basculement optique (*SW2*) correspond à un commutateur optique.

La présente technique concerne encore un procédé de protection d'une communication bidirectionnelle de type point à point via au moins une fibre optique principale (A) entre un terminal de ligne optique *(OLT),* par l'intermédiaire d'au moins un premier module émetteur-récepteur optronique *(Tx-Rx-1),* et un équipement client *(ONU),* par l'intermédiaire d'au moins un deuxième module émetteur-récepteur optronique *(Tx-Rx-2),* dans un réseau de communication optique, le procédé comprenant les étapes suivantes, mises en œuvre dans ledit au moins un premier module émetteur-récepteur optronique (*Tx-Rx-1*) *:*
- première supervision (E11) de ladite communication bidirectionnelle via la fibre optique principale (A) par comparaison de la puissance optique reçue avec une valeur de référence de puissance optique délivrant un résultat négatif de comparaison si la puissance optique reçue est inférieure à la valeur de référence de puissance optique,
- basculement (E12) de la communication bidirectionnelle vers une communication bidirectionnelle via une fibre optique de secours (*B*) entre le premier module émetteur-récepteur optronique *(Tx-Rx-1)* et le deuxième module émetteur-récepteur optronique *(Tx-Rx-2)* si le résultat de comparaison est négatif.

Par exemple, la première supervision est mise en œuvre périodiquement selon une période prédéterminée et où le basculement est mis en œuvre lorsqu'un nombre prédéterminé de résultats de comparaison négatifs sont délivrés par la première supervision.

De plus, le procédé de protection d'une communication bidirectionnelle comprend les étapes suivantes, mises en œuvre dans ledit au moins un deuxième module émetteur-récepteur optronique *(Tx-Rx-2)* :
- deuxième supervision de ladite communication bidirectionnelle via la fibre optique principale (A) par comparaison de la puissance optique reçue avec une valeur de référence de puissance optique délivrant un résultat négatif de comparaison si la puissance optique reçue est inférieure à la valeur de référence de puissance optique,
- basculement de la communication bidirectionnelle vers une communication bidirectionnelle via la fibre optique de secours (B) si le résultat de comparaison est négatif.

Par exemple, la deuxième supervision est mise en œuvre périodiquement selon une période prédéterminée et où le basculement est mis en œuvre lorsqu'un nombre prédéterminé de résultats de comparaison négatifs sont délivrés par la deuxième supervision.

Les modules émetteur-récepteur décrits selon les différents modes de réalisation de la présente technique, ainsi que le système de protection, sont aptes à mettre en œuvre respectivement les étapes du procédé décrit en relation avec les différents modes de réalisation.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] présente un exemple de module émetteur-récepteur optronique côté central, selon un mode de réalisation de la présente technique ;
[Fig 2] présente un exemple de module émetteur-récepteur optronique côté client, selon un premier mode de réalisation de la présente technique ;
[Fig 3a], [Fig 3b] et [Fig 3c] illustrent trois situations de fonctionnement d'un système de protection selon un premier mode de réalisation de la présente technique ;
[Fig 4] illustre les principales étapes d'un procédé de protection d'une communication bidirectionnelle selon un premier mode de réalisation de la présente technique ;
[Fig 5] présente un exemple de module émetteur-récepteur optronique côté client, selon un deuxième mode de réalisation de la présente technique ;
[Fig 6a], [Fig 6b] et [Fig 6c] illustrent trois situations de fonctionnement d'un système de protection selon un deuxième mode de réalisation de la présente technique ;
[Fig 7] illustre les principales étapes d'un procédé de protection d'une communication bidirectionnelle selon un deuxième mode de réalisation de la présente technique.

### Description détaillée de modes de réalisation de l'invention

Le principe général de la présente technique repose sur la mise en œuvre d'un module de basculement optique intégré au module émetteur-récepteur optronique côté réseau/central, associé à un module de supervision optique de la puissance du signal incident reçu, pour permettre la détection d'une défaillance sur la fibre optique utilisée pour la communication optique bidirectionnelle, de type point à point, en cours entre un équipement côté réseau/central et un équipement côté client. Ainsi, le basculement sur une fibre optique de secours, lorsque la fibre optique principale présente un défaut (par exemple une coupure), est mis en œuvre directement à l'intérieur du module émetteur-récepteur optronique côté central, sans nécessiter d'éléments externes et sans modifier la structure du boitier du module émetteur-récepteur optronique. En effet, un tel module est doté d'une deuxième entrée-sortie fibre, laquelle est donc utilisée, selon la présente technique, pour mettre en œuvre une communication bidirectionnelle de secours via une deuxième fibre. Il est à noter que la présente technique s'applique également à des modules dotés de n interface d'entrée-sortie fibre, de sorte à pouvoir fournir plusieurs chemins de secours dans le cas de coupure de la fibre principale et de la première fibre de secours par exemple. On décrit par la suite une configuration avec une fibre principale A et une fibre de secours *B*.

Les deux fibres sont connectées côté client, où un dispositif d'émission-réception est en mesure de traiter les signaux optiques quelle que soit la fibre utilisée (principale ou de secours). Des techniques sont connues pour mettre en œuvre un tel dispositif côté client, mais il est avantageux qu'un deuxième module émetteur-récepteur optronique selon la présente technique (selon deux modes de réalisation) soit également mis en œuvre côté client, afin de mieux pouvoir adapter la réception et la transmission à l'une ou l'autre des fibres (principale ou de secours).

Ainsi, la présente technique permet d'intégrer la fonction de protection de la communication bidirectionnelle, et donc la fonction de basculement vers un lien de secours, directement dans le module émetteur-récepteur optronique prévu côté central, réduisant ainsi, par rapport aux techniques actuelles, la complexité de mise en œuvre de la protection, la complexité de maintenance et les coûts associés. De plus, comme on le verra ci-après, c'est le même équipement qui détecte un problème dans la transmission de la liaison PtP et un problème sur le lien optique, optimisant ainsi la gestion des problèmes détectés.

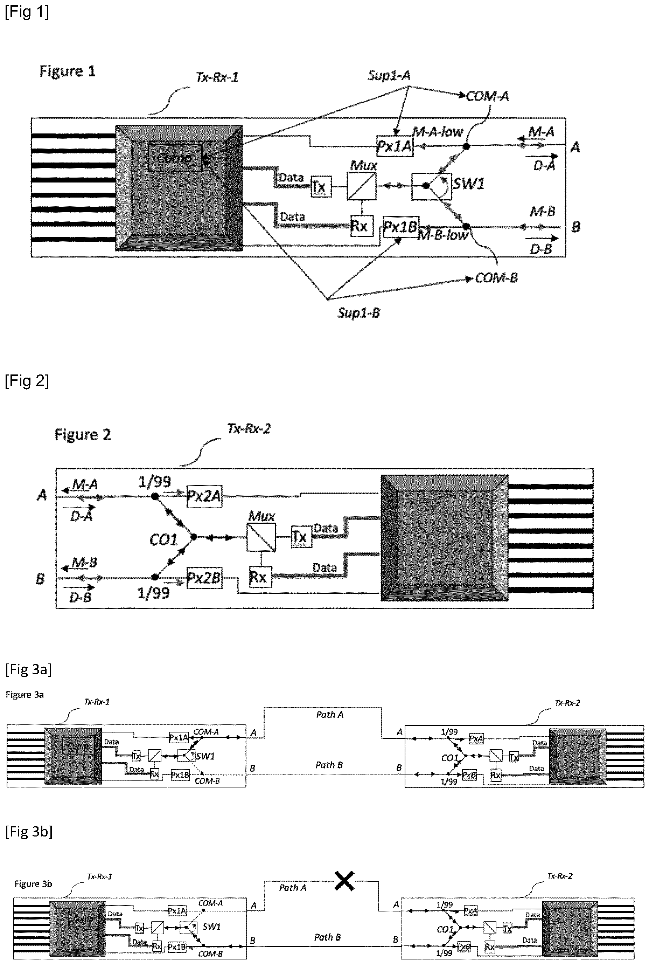

Comme illustré sur la figure 1, un premier module émetteur-récepteur optronique *Tx-Rx-1* destiné à être connecté à un équipement réseau OLT est composé d'une interface électronique et d'une interface optique comprenant notamment un module d'émission Tx et réception Rx sur deux longueurs d'onde différentes, permettant une communication bidirectionnelle, et d'un élément de multiplexage en longueur d'onde permettant le traitement différencié du signal optique reçu et du signal optique à émettre.

Par ailleurs, selon la présente technique, l'interface optique du module émetteur-récepteur optronique connecté à l'équipement réseau OLT, comprend également un module de basculement optique SW1 permettant de basculer la communication bidirectionnelle de la fibre A vers la fibre *B* et réciproquement, en fonction d'une supervision optique mise en œuvre sur la puissance du signal montant reçu via la fibre *A*, respectivement la fibre *B*. Le module de basculement SW1 correspond par exemple à un commutateur optique piloté par un signal généré en fonction du résultat de supervision optique.

La supervision optique est quant à elle mise en œuvre par un module de supervision optique *Sup1-A* comprenant notamment un coupleur optique montant de prélèvement *COM-A,* par exemple de type 1/99, c'est-à-dire prélevant 1/100^{ème} du signal montant reçu de la fibre A, respectivement *B*, pour effectuer une mesure de puissance, par exemple via une photodiode de type puissance mètre. Le reste du signal montant, c'est-à-dire les 99/100^{èmes} en sortie du coupleur optique montant de prélèvement sont reçus par le module de basculement optique *SW1* pour un traitement du signal reçu classique. La puissance mesurée par la photodiode est ensuite comparée à une valeur de référence, par exemple un seuil prédéterminé en dessous duquel on détecte une défaillance de la fibre concernée A, respectivement *B*. Cette comparaison et cette détection sont mises en œuvre par un comparateur comprenant ou connecté à des moyens de pilotage du module de basculement *SW1*.

Ce comparateur est par exemple un composant électronique capable de comparer un signal électrique représentatif de la puissance optique reçue par la photodiode avec un seuil électronique préalablement déterminé, pour générer une alerte, sous la forme d'un signal à transmettre vers une entrée de pilotage du module de basculement.

Selon une première variante, illustrée en figure 1 notamment, le comparateur *Comp* est entièrement intégré dans l'interface électronique du module émetteur-récepteur *Tx-Rx-1* et génère donc, en sortie, un signal de commande du module de basculement *SW1*, pour changer de fibre optique, à la fois en transmission et en réception, si le signal reçu est inférieur à un seuil sauvegardé également dans une mémoire du module émetteur-récepteur *Tx-Rx-1.*

Selon une deuxième variante, une partie ou tout le comparateur est externalisé, dans un module de pilotage externe, recevant en entrée, en provenance du module émetteur-récepteur *Tx-Rx-1,* la valeur de puissance optique mesurée par la photodiode, ou directement le résultat de la comparaison avec un seuil de référence, et générant une alarme transmise au module émetteur-récepteur *Tx-Rx-1* vers une entrée de pilotage du module de basculement *SW1*. Il est à noter que le seuil de référence peut être fixe ou renseigné par le module de pilotage externe. Le module de pilotage externe est donc apte à lire, recevoir et écrire des informations dans le module émetteur-récepteur optronique. Ces informations sont les valeurs représentant la puissance optique mesurée pour chacune des fibres, une alarme issue des comparateurs, un état de la bascule du switch optique, une écriture d'un seuil de référence pour le comparateur. En effet, il existe un canal d'échange permettant d'échanger des données de gestion du module émetteur-récepteur, par exemple pour les informations de la fonctionnalité de "Digital Optical Monitoring" (DOM), en parallèle du canal qui transmet les données de type Ethernet par exemple. Dans cette variante le module de pilotage externe peut être compris dans l'OLT. Il est aussi envisageable que l'OLT agisse en relais vers un autre équipement tel qu'un serveur qui hébergerait le pilotage.

Ainsi, la mesure de puissance optique (dans l'une et/ou l'autre des deux voies) peut être ajoutée dans une liste de paramètres de diagnostic échangée entre le module émetteur-récepteur et l'équipement OLT ou ONU. En effet, les modules émetteur-récepteur supportent des fonctions de diagnostic (par exemple " Digital Diagnostics Monitoring " ou DDM en anglais) conformément aux standards de l'industrie. Le contrôleur de suivi de diagnostic est disponible via un bus I2C. De plus, la fonctionnalité de "Digital Optical Monitoring" (DOM) permet notamment à l'équipement OLT (ou ONU) de relever en temps réel des paramètres, comme la puissance optique de sortie, la puissance optique d'entrée, la température et la tension d'alimentation du module émetteur-récepteur. Cette fonctionnalité DOM est donc utilisée dans la deuxième variante pour la transmission de la ou les valeurs de puissance mesurées par la ou les photodiodes, ou directement le ou les résultats de la comparaison avec un seuil de référence, du module émetteur-récepteur vers le module de pilotage.

Un deuxième module de supervision optique *Sup1-B,* similaire, est mis en œuvre pour le signal reçu via la fibre B.

Ce premier module émetteur-récepteur optronique *Tx-Rx-1* illustré en figure 1 est commun aux deux modes de réalisation décrits ci-après, mettant en œuvre deux variantes de module émetteur-récepteur optronique côté client, i.e. destiné à être connecté à un équipement client de type ONU, noté ci-après deuxième module émetteur-récepteur optronique *Tx-Rx-2.*

Selon un premier mode de réalisation, illustré en figure 2, le deuxième module émetteur-récepteur optronique *Tx-Rx-2* est composé d'une interface électronique et d'une interface optique comprenant notamment un module d'émission Tx et réception Rx sur deux longueurs d'onde différentes, permettant une communication bidirectionnelle, et d'un élément de multiplexage en longueur d'onde permettant le traitement différencié du signal optique reçu et du signal optique à émettre.

Par ailleurs, selon la présente technique, l'interface optique du deuxième module émetteur-récepteur optronique *Tx-Rx-2* comprend également un coupleur optique principal *CO1,* apte à séparer le signal optique issu du module d'émission Tx en deux signaux optiques sensiblement de même puissance à transmettre respectivement dans les deux fibres optiques A et *B*. De plus, ce coupleur optique principal *CO1* est également apte à agréger des signaux représentatifs des signaux reçus respectivement via les fibres optiques A et B, en un signal à traiter par le module de réception Rx.

Optionnellement, ce deuxième module émetteur-récepteur optronique *Tx-Rx-2* comprend également au moins un module de supervision optique comprenant notamment un coupleur optique montant de prélèvement, par exemple de type 1/99, c'est-à-dire prélevant 1/100^{ème} du signal montant reçu de la fibre *A*, respectivement *B*, pour effectuer une mesure de puissance, par exemple via une photodiode de type puissance mètre *Px2A.* Le reste du signal montant, c'est-à-dire les 99/100^{èmes} en sortie du coupleur optique montant de prélèvement sont reçus par le coupleur optique principal *CO1,* pour un traitement du signal reçu classique. Ce module de supervision optique permet notamment, au moment d'une recette d'installation ou de maintenance du système, de déterminer si la fibre reliée à l'entrée-sortie A côté équipement central OLT est reliée à l'entrée-sortie A ou B côté équipement client ONU. En effet, il est très fréquent que les fibres soient croisées au moment de l'installation de l'infrastructure, sans impact sur le fonctionnement à partir du moment où le croisement est identifié dès la mise en service. La supervision permet cette identification.

Un deuxième module de supervision optique, similaire, est mis en œuvre pour le signal reçu via la fibre B.

Avant de décrire plus en détails le procédé de basculement, les figures 3a à 3c illustrent le système de protection selon ce premier mode de réalisation, pour les trois situations suivantes :
- figure 3a : la communication bidirectionnelle est initiée sur la fibre optique A, le module de basculement du premier module émetteur-récepteur *Tx-Rx-1* est donc dans une position dans laquelle le signal émis par le module Tx est dirigé vers la fibre A et le signal reçu de la fibre A est dirigé vers le module Rx. Aucun signal n'est transmis sur la fibre B par le premier module émetteur-récepteur *Tx-Rx-1* et un éventuel signal qui serait reçu via la fibre B par le premier module émetteur-récepteur *Tx-Rx-1* n'est pas traité (ceci est représenté en trait pointillé à l'intérieure du premier module émetteur-récepteur *Tx-Rx-1).* En revanche, côté client, le deuxième module émetteur-récepteur optronique *Tx-Rx-2* traite les signaux reçus sur les deux fibres A et B, les agrège via le coupleur optique *CO1,* pour les traiter dans le module Rx. Dans le cas présent, aucun signal n'est reçu via la fibre B et c'est donc uniquement le signal reçu via la fibre A qui est traité. Enfin, le signal généré par le module Tx de ce deuxième module émetteur-récepteur optronique *Tx-Rx-2* est séparé en deux signaux de même puissance par via le coupleur optique *CO1,* afin d'être transmis sur les deux fibres A et B. Le deuxième module émetteur-récepteur optronique *Tx-Rx-2* n'a en fait pas connaissance de la fibre sur laquelle la communication bidirectionnelle est mise en œuvre.
- figure 3b : le module de supervision du premier module émetteur-récepteur *Tx-Rx-1* a détecté une coupure de la fibre A, et a donc commandé le module de basculement pour qu'il change de position et se retrouve dans une position dans laquelle le signal émis par le module Tx est dirigé vers la fibre B et le signal reçu de la fibre B est dirigé vers le module Rx. Aucun signal n'est transmis sur la fibre A par le premier module émetteur-récepteur *Tx-Rx-1* (ceci est représenté en trait pointillé à l'intérieure du premier module émetteur-récepteur *Tx-Rx-1).* Côté client, le fonctionnement est identique à celui décrit en relation avec la figure 3a, à ceci près qu'il ne reçoit pas de signal via la fibre A.

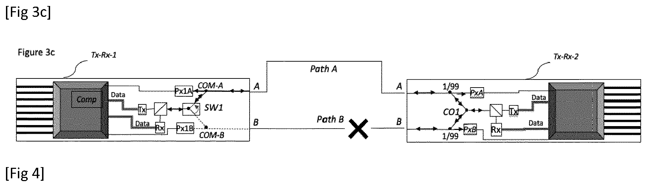

- figure 3c : le module de supervision du premier module émetteur-récepteur *Tx-Rx-1* a détecté une coupure de la fibre *B*, sur laquelle la communication bidirectionnelle a basculé précédemment, et a donc commandé le module de basculement pour qu'il change à nouveau de position et se retrouve dans une position dans laquelle le signal émis par le module Tx est dirigé vers la fibre A et le signal reçu de la fibre A est dirigé vers le module Rx. Aucun signal n'est transmis sur la fibre B par le premier module émetteur-récepteur *Tx-Rx-1* (ceci est représenté en trait pointillé à l'intérieure du premier module émetteur-récepteur *Tx-Rx-1).* Côté client, le fonctionnement est toujours identique à celui décrit en relation avec la figure 3a.

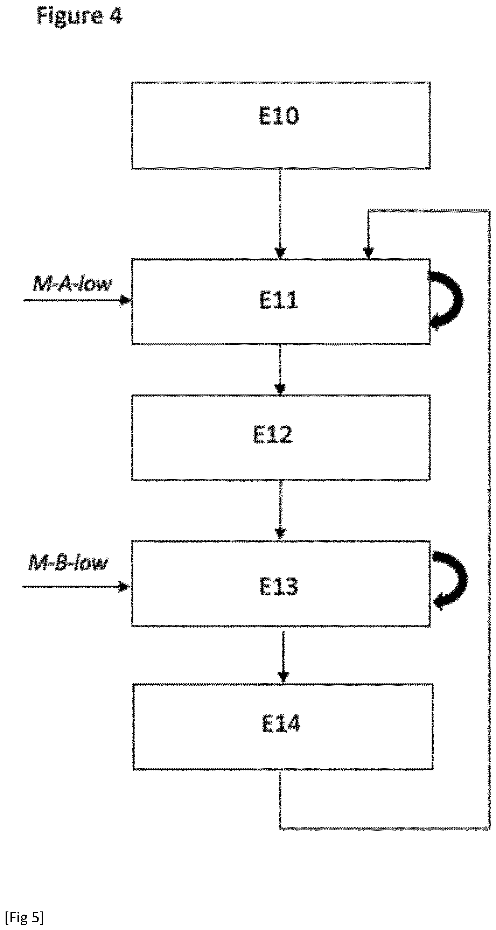

On décrit donc maintenant, toujours selon ce premier mode de réalisation, les étapes du procédé de protection de la communication bidirectionnelle mettant en œuvre le basculement d'une fibre A vers une fibre *B*, comme illustré sur la figure 4. Une première étape E10 d'initiation de la communication bidirectionnelle sur la fibre principale A est mise en œuvre avec une première supervision E11 de cette communication bidirectionnelle via la fibre optique principale A. Cette supervision, décrite en détails précédemment, est effectuée par comparaison de la puissance optique reçue avec une valeur de référence de puissance optique délivrant un résultat négatif de comparaison si la puissance optique reçue est inférieure à la valeur de référence de puissance optique. Un basculement E12 de la communication bidirectionnelle vers une communication bidirectionnelle via une fibre optique de secours B a donc lieu si le résultat de comparaison est négatif.

Une supervision E13 de la communication bidirectionnelle via la fibre optique principale B est donc mise en œuvre, décrite en détails précédemment, par comparaison de la puissance optique reçue avec une valeur de référence de puissance optique délivrant un résultat négatif de comparaison si la puissance optique reçue est inférieure à la valeur de référence de puissance optique. Un basculement E14 de la communication bidirectionnelle vers une communication bidirectionnelle via une fibre optique principale A a donc lieu si le résultat de comparaison est négatif et ainsi de manière itérative, à chaque détection d'une coupure sur la fibre mettant en œuvre la communication bidirectionnelle courante.

Selon une variante, la supervision est mise en œuvre périodiquement et le basculement n'est effectué que lorsqu'un nombre prédéterminé de résultats négatifs de supervision est dépassé. Cela permet d'écouter, pendant une certaine durée, par exemple de l'ordre de quelques millisecondes, le signal reçu via la fibre sur laquelle la communication bidirectionnelle est en cours et de n'effectuer le basculement que lorsqu'une coupure est avérée et non pas suite à un problème ponctuel sur la fibre.

Toutes ces étapes sont mises en œuvre par le premier module émetteur-récepteur *Rx-Tx-1,* et le deuxième module émetteur-récepteur *Rx-Tx-2* fonctionne comme décrit précédemment en traitant les signaux reçus via les deux fibres et en émettant également sur les deux fibres. Ce mode de réalisation permet ainsi d'offrir une protection de la communication bidirectionnelle mise en œuvre, grâce à un basculement sur une fibre de secours si une coupure est détectée sur la fibre principale, avec de la supervision uniquement côté central.

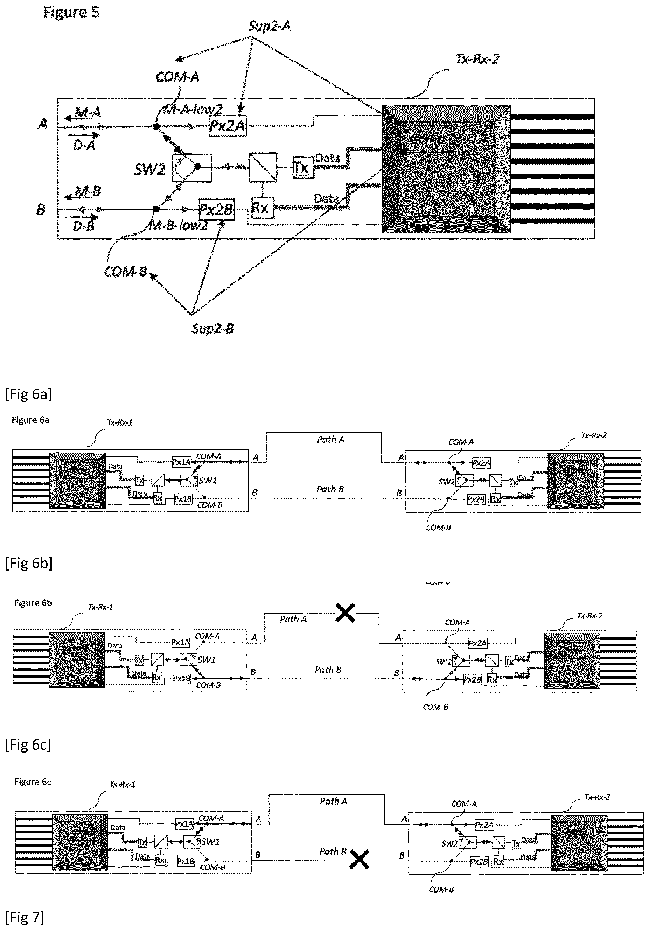

Selon un deuxième mode de réalisation, illustré en figure 5, le deuxième module émetteur-récepteur optronique *Tx-Rx-2* destiné à être connecté à un équipement client ONU est composé d'une interface électronique et d'une interface optique comprenant notamment un module d'émission Tx et réception Rx sur deux longueurs d'onde différentes, permettant une communication bidirectionnelle, et d'un élément de multiplexage en longueur d'onde permettant le traitement différencié du signal optique reçu et du signal optique à émettre.

Par ailleurs, selon la présente technique, l'interface optique du module émetteur-récepteur optronique *Tx-Rx-2* connecté à l'équipement réseau OLT, comprend également un module de basculement optique *SW2* permettant de basculer la communication bidirectionnelle de la fibre A vers la fibre *B* et réciproquement, en fonction d'une supervision optique mise en œuvre sur la puissance du signal reçu via la fibre A, respectivement la fibre *B*. Le module de basculement *SW2* correspond par exemple à un commutateur optique piloté par un signal généré en fonction du résultat de supervision optique.

Comme pour le module émetteur-récepteur optronique Tx-Rx-1 décrit précédemment, la supervision optique est quant à elle mise en œuvre par un module de supervision optique *Sup2-A* comprenant notamment un coupleur optique montant de prélèvement, par exemple de type 1/99, c'est-à-dire prélevant 1/100^{ème} du signal montant reçu de la fibre A, respectivement *B*, pour effectuer une mesure de puissance, par exemple via une photodiode de type puissance mètre. Le reste du signal montant, c'est-à-dire les 99/100^{èmes} en sortie du coupleur optique montant de prélèvement sont reçus par le module de basculement optique *SW2* pour un traitement du signal reçu classique. La puissance mesurée par la photodiode est ensuite comparée à une valeur de référence, par exemple un seuil prédéterminé en dessous duquel on détecte une défaillance de la fibre concernée A, respectivement B. Cette comparaison et cette détection sont mises en œuvre par un comparateur comprenant ou connecté à des moyens de pilotage du module de basculement *SW2*.

Ce comparateur est un par exemple un composant électronique capable de comparer une mesure de puissance optique issue de la photodiode avec un seuil préalablement déterminé pour générer une alerte, sous la forme d'un signal à transmettre vers une entrée de pilotage du module de basculement. Les mêmes variantes que celles décrites en relation avec le premier mode de réalisation sont possibles et non décrites à nouveau ici.

Un deuxième module de supervision optique *Sup2-B,* similaire, est mis en œuvre pour le signal reçu via la fibre B.

Il est à noter que cette mesure de puissance optique (dans l'une et/ou l'autre des deux voies) peut être ajoutée dans une liste de paramètres de diagnostic échangée entre le module émetteur-récepteur et l'équipement OLT. En effet, les modules émetteur-récepteur supportent des fonctions de diagnostic (par exemple " Digital Diagnostics Monitoring " ou DDM en anglais) conformément aux standards de l'industrie. Le contrôleur de suivi de diagnostic est disponible via un bus I2C. De plus, la fonctionnalité de "Digital Optical Monitoring" (DOM) permet notamment à l'équipement OLT de relever en temps réel des paramètres, comme la puissance optique de sortie, la puissance optique d'entrée, la température et la tension d'alimentation du module émetteur-récepteur.

Avant de décrire plus en détails le procédé de basculement, les figures 5a à 5c illustrent le système de protection selon ce premier mode de réalisation, pour les trois situations suivantes :
- figure 5a : la communication bidirectionnelle est initiée sur la fibre optique A, le module de basculement du premier module émetteur-récepteur *Tx-Rx-1* est donc dans une position dans laquelle le signal émis par le module Tx est dirigé vers la fibre A et le signal reçu de la fibre A est dirigé vers le module Rx. Aucun signal n'est transmis sur la fibre B par le premier module émetteur-récepteur *Tx-Rx-1* et un éventuel signal qui serait reçu via la fibre B par le premier module émetteur-récepteur *Tx-Rx-1* n'est pas traité (ceci est représenté en trait pointillé à l'intérieure du premier module émetteur-récepteur *Tx-Rx-1).* De même, côté client, le module de basculement du deuxième module émetteur-récepteur *Tx-Rx-2* est dans une position dans laquelle le signal émis par le module Tx est dirigé vers la fibre A et le signal reçu de la fibre A est dirigé vers le module Rx. Aucun signal n'est transmis sur la fibre B par le deuxième module émetteur-récepteur *Tx-Rx-2* et un éventuel signal qui serait reçu via la fibre B par le deuxième module émetteur-récepteur *Tx-Rx-2* n'est pas traité (ceci est représenté en trait pointillé à l'intérieure du deuxième module émetteur-récepteur *Tx-Rx-2*). Les deux modules émetteur-récepteur *Tx-Rx-1* et *Tx-Rx-2* fonctionnent donc de la même manière et la fibre de secours B n'est pas utilisée, tant que la communication bidirectionnelle sur la fibre A est optimale et qu'aucun dysfonctionnement de ce lien n'est détectée.
- figure 5b : le module de supervision du premier module émetteur-récepteur *Tx-Rx-1* a détecté une coupure de la fibre A, et a donc commandé le module de basculement pour qu'il change de position et se retrouve dans une position dans laquelle le signal émis par le module Tx est dirigé vers la fibre *B* et le signal reçu de la fibre B est dirigé vers le module Rx. Aucun signal n'est transmis sur la fibre A par le premier module émetteur-récepteur *Tx-Rx-1* (ceci est représenté en trait pointillé à l'intérieure du premier module émetteur-récepteur *Tx-Rx-1).* Côté client, le fonctionnement est identique car le deuxième module émetteur-récepteur *Tx-Rx-2* est également capable de détecter une coupure sur la fibre A, via son module de supervision, et de basculer sur la fibre *B*, en émission comme en réception.
- figure 5c : le module de supervision du premier module émetteur-récepteur *Tx-Rx-1* a détecté une coupure de la fibre *B*, sur laquelle la communication bidirectionnelle a basculé précédemment, et a donc commandé le module de basculement pour qu'il change à nouveau de position et se retrouve dans une position dans laquelle le signal émis par le module Tx est dirigé vers la fibre A et le signal reçu de la fibre A est dirigé vers le module Rx. Aucun signal n'est transmis sur la fibre *B* par le premier module émetteur-récepteur *Tx-Rx-1* (ceci est représenté en trait pointillé à l'intérieure du premier module émetteur-récepteur *Tx-Rx-1).* Côté client, le même basculement est effectué, après détection d'une coupure sur le lien *B*.

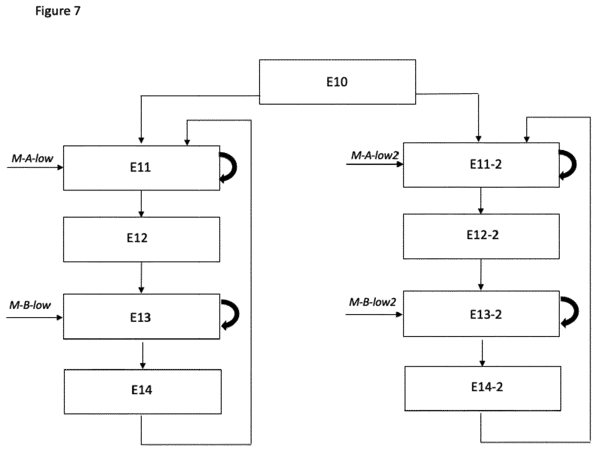

On décrit donc maintenant, toujours selon ce deuxième mode de réalisation, les étapes du procédé de protection de la communication bidirectionnelle mettant en œuvre le basculement d'une fibre A vers une fibre *B*, comme illustré sur la figure 7.

Les étapes décrites précédemment, en relation avec la figure 4, mises en œuvre côté central, sont identique.

En revanche, le fonctionnement côté client est différent car le deuxième module émetteur-récepteur *Rx-Tx-2* comprend lui aussi des modules de supervision et un module de basculement. Les étapes E11-2, E12-2, E13-2 et E14-2, mises en œuvre dans ce deuxième module émetteur-récepteur *Rx-Tx-2* sont donc les mêmes que celles mises en œuvre dans le premier module émetteur-récepteur *Rx-Tx-1.*

De même que pour le premier mode de réalisation, la supervision est mise en œuvre périodiquement, à la fois côté central et côté client, et le basculement n'est effectué que lorsqu'un nombre prédéterminé de résultats négatifs de supervision est dépassé. Cela permet d'écouter, pendant une certaine durée, par exemple de l'ordre de quelques millisecondes, le signal reçu via la fibre sur laquelle la communication bidirectionnelle est en cours et de n'effectuer le basculement que lorsqu'une coupure est avérée et non pas suite à un problème ponctuel sur la fibre. Cette période d'écoute permet également à chaque module émetteur-récepteur *Rx-Tx-1* et *Rx-Tx-2* de se stabiliser et de ne pas basculer de manière non synchronisée, ce qui pourrait entrainer une instabilité générale et de très grosses perturbations.

Ce deuxième mode de réalisation présente l'intérêt d'utiliser des modules identiques côté central et côté client, ce qui simplifie à la fois la gestion, la mise en œuvre et la maintenance des équipements.

## Revendications

1. Module émetteur-récepteur optronique apte à mettre en œuvre une communication bidirectionnelle optique de type point à point via au moins une fibre optique principale (A), et comprenant :
- un premier module de supervision optique *(Sup1-A)* d'un signal montant reçu via la fibre optique principale (A) délivrant un premier résultat de supervision,
- un premier module de basculement optique (*SW1*) de la communication bidirectionnelle via la fibre optique principale (A) vers une communication bidirectionnelle via une fibre optique de secours (B), et réciproquement, le premier module de basculement optique (*SW1*) étant piloté par le premier module de supervision optique *(Sup1-A)* en fonction dudit premier résultat de supervision délivré,
et comprenant également un deuxième module de supervision optique *(Sup1-B)* d'un signal montant reçu via la fibre optique de secours (B) délivrant un deuxième résultat de supervision et pilotant ledit premier module de basculement optique (*SW1*)
et où le premier, respectivement le deuxième, module de supervision optique (*Sup1-A, Sup1-B)* comprend :
- un premier, respectivement deuxième, coupleur optique montant de prélèvement *(COM-A, COM-B)* apte à séparer au moins un signal optique montant (*M-A, M-B*) reçu via la fibre optique principale A, respectivement la fibre optique de secours (B), en deux signaux optiques séparés selon un rapport prédéterminé de puissance de référence pour lesdits signaux optiques séparés, ledit premier, respectivement deuxième, coupleur optique montant de prélèvement *(COM-A, COM-B)* délivrant un premier, respectivement deuxième, signal de puissance faible (*M-A-low, M-B-low*) et un premier, respectivement deuxième, signal de puissance forte (*M-A-high, M-B-high*),
- au moins une première, respectivement deuxième, photodiode de mesure de puissance (*PxA, PxB*) délivrant une première, respectivement deuxième, mesure de puissance associée au premier, respectivement deuxième, signal de puissance faible (*M-A-low, M-B-low*)*.*

2. Module émetteur-récepteur optronique selon la revendication 1, où le premier, respectivement le deuxième, module de supervision optique (*Sup1-A, Sup1-B)* comprend également au moins un comparateur *Comp* délivrant un résultat de comparaison de la première, respectivement deuxième, mesure de puissance avec au moins une valeur de référence prédéterminée, et comprenant des moyens de pilotage du premier module de basculement optique (*SW1*).

3. Module émetteur-récepteur optronique selon la revendication 2, où les moyens de pilotage du premier module de basculement optique (*SW1*) correspondent à des moyens de transmission du résultat de comparaison à une entité externe audit émetteur-récepteur optronique et où ledit module émetteur-récepteur optronique comprend des moyens de réception, en provenance de ladite entité externe audit module émetteur-récepteur optronique, d'une commande de pilotage du premier module de basculement optique (*SW1*).

4. Module émetteur-récepteur optronique selon la revendication 1, comprenant des moyens de transmission de la première, respectivement deuxième, mesure de puissance à une entité externe audit module émetteur-récepteur optronique et des moyens de réception, en provenance de ladite entité externe audit module émetteur-récepteur optronique, d'une commande de pilotage du premier module de basculement optique (*SW1*).

5. Système de protection d'une communication bidirectionnelle de type point à point via au moins une fibre optique principale (A) entre un terminal de ligne optique *(OLT)* et un équipement client *(ONU)* dans un réseau de communication optique, le système de protection comprenant au moins un premier module émetteur-récepteur optronique *(Tx-Rx-1)* selon la revendication 1, connecté audit terminal de ligne optique et à ladite au moins une fibre optique principale (A) et au moins un deuxième module émetteur-récepteur optronique *(Tx-Rx-2)* connecté audit équipement client, où ledit deuxième module émetteur-récepteur optronique *(Tx-Rx-2)* est apte à recevoir et émettre un signal sur la fibre optique principale (A) et/ou la fibre optique de secours *(B).*

6. Système de protection d'une communication bidirectionnelle selon la revendication 5, où ledit au moins un deuxième module émetteur-récepteur optronique *(Tx-Rx-2)* comprend une interface optique comprenant un module d'émission, un module de réception et un coupleur optique principal *CO1,* apte à séparer le signal optique descendant issu du module d'émission en deux signaux optiques descendants sensiblement de même puissance à transmettre respectivement dans les deux fibres optiques A et *B*, et apte à agréger des signaux représentatifs des signaux montants reçus respectivement via les fibres optiques A et *B*, en un signal à traiter par le module de réception.

7. Système de protection d'une communication bidirectionnelle selon la revendication 5, où ledit au moins un deuxième module émetteur-récepteur optronique *(Tx-Rx-2)* comprend :
- un troisième module de supervision optique *(Sup2-A)* d'un signal reçu via la fibre optique principale (A) délivrant un troisième résultat de supervision,
- un deuxième module de basculement optique (*SW2*) de la communication bidirectionnelle via la fibre optique principale (A) vers une communication bidirectionnelle via une fibre optique de secours (B), et réciproquement, le deuxième module de basculement optique (*SW2*) étant piloté par le troisième module de supervision optique *(Sup2-A)* en fonction dudit troisième résultat de supervision délivré.

8. Système de protection d'une communication bidirectionnelle selon la revendication 7, où ledit au moins un deuxième module émetteur-récepteur optronique *(Tx-Rx-2)* comprend également un deuxième module de supervision optique (*Sup2-B*) d'un signal reçu via la fibre optique de secours (B) délivrant un quatrième résultat de supervision et pilotant ledit deuxième module de basculement optique (*SW2*).

9. Système de protection d'une communication bidirectionnelle selon la revendication 7, où le premier module de basculement optique (SW1) et/ou le deuxième module de basculement optique (*SW2*) correspond à un commutateur optique.

10. Procédé de protection d'une communication bidirectionnelle de type point à point via au moins une fibre optique principale (A) entre un terminal de ligne optique *(OLT),* par l'intermédiaire d'au moins un premier module émetteur-récepteur optronique *(Tx-Rx-1),* et un équipement client *(ONU),* par l'intermédiaire d'au moins un deuxième module émetteur-récepteur optronique *(Tx-Rx-2),* dans un réseau de communication optique, le procédé comprenant les étapes suivantes, mises en œuvre dans ledit au moins un premier module émetteur-récepteur optronique (*Tx-Rx-1*) *:*
- première supervision (E11) de ladite communication bidirectionnelle via la fibre optique principale (A) par comparaison de la puissance optique reçue avec une valeur de référence de puissance optique délivrant un résultat négatif de comparaison si la puissance optique reçue est inférieure à la valeur de référence de puissance optique,
- basculement (E12) de la communication bidirectionnelle vers une communication bidirectionnelle via une fibre optique de secours (B) entre le premier module émetteur-récepteur optronique *(Tx-Rx-1)* et le deuxième module émetteur-récepteur optronique *(Tx-Rx-2)* si le résultat de comparaison est négatif.

11. Procédé de protection d'une communication bidirectionnelle selon la revendication 10, où la première supervision est mise en œuvre périodiquement selon une période prédéterminée et où le basculement est mis en œuvre lorsqu'un nombre prédéterminé de résultats de comparaison négatifs sont délivrés par la première supervision.

12. Procédé de protection d'une communication bidirectionnelle selon la revendication 10 comprenant les étapes suivantes, mises en œuvre dans ledit au moins un deuxième module émetteur-récepteur optronique (*Tx-Rx-2*) *:*
- deuxième supervision de ladite communication bidirectionnelle via la fibre optique principale (A) par comparaison de la puissance optique reçue avec une valeur de référence de puissance optique délivrant un résultat négatif de comparaison si la puissance optique reçue est inférieure à la valeur de référence de puissance optique,
- basculement de la communication bidirectionnelle vers une communication bidirectionnelle via la fibre optique de secours (B) si le résultat de comparaison est négatif.

13. Procédé de protection d'une communication bidirectionnelle selon la revendication 12, où la deuxième supervision est mise en œuvre périodiquement selon une période prédéterminée et où le basculement est mis en œuvre lorsqu'un nombre prédéterminé de résultats de comparaison négatifs sont délivrés par la deuxième supervision.
